# EUROPÄISCHE PATENTSCHRIFT

(11) **EP 2 112 058 B1**
(45) Veröffentlichungstag und Bekanntmachung des Hinweises auf die Patenterteilung: **10.10.2012**
(21) Anmeldenummer: 09002393.8
(22) Anmeldetag: 20.02.2009
(51) Int. Cl.: B62D 65/02

(54) **Verfahren zur Fertigung von Kraftfahrzeugen**
Method for manufacturing motor vehicles
Procédé de fabrication de véhicules automobiles

(30) Priorität: 22.04.2008 DE 102008020083
(43) Veröffentlichungstag der Anmeldung: 28.10.2009
(73) Patentinhaber: Dr. Ing. h.c. F. Porsche AG, 70435 Stuttgart (DE)
(72) Erfinder: Meyer, Christian, 04435 Schkeuditz (DE); Schuster, Ralf, 04509 Wiedemar (DE); Müller, Lutz, 04425 Taucha (DE); Käuffelin, Pascal, 08428 Langenbernsdorf (DE)

(56) Entgegenhaltungen:
- JP-A- 3 072 520
- JP-A- 4 354 632
- JP-A- 58 016 964
- JP-A- 2000 042 871

## Beschreibung

Die Erfindung betrifft ein Verfahren zur Fertigung von Kraftfahrzeugen gemäß dem Oberbegriff des Patentanspruchs 1.

Aus dem Serienfahrzeugbau ist es bekannt, dass Zulieferer die benötigten Module rechtzeitig und in der notwendigen Menge an der Fertigungsstraße für die Herstellung der Kraftfahrzeuge zur Verfügung stellen. Darüber hinaus hat im Serienfahrzeugbau die sog. Just-in-Sequenz-Produktion Einzug gehalten, bei der die Module zusätzlich in der Reihenfolge angeliefert werden, in der sie auch verarbeitet werden. Die Vorlaufzeit für die gelieferten Module ist unter anderem abhängig von der Fertigungsdauer der Module, der Anlieferungsstrecke und vom Bündelungsgrad beim Transport der Module.

Aus der DE 102 21 733 A1 ist ein Verfahren zur Fertigung bekannt, bei dem die angelieferten Module Fahrzeugkarossen sind, die in einer geographisch entfernten Produktionsstätte bis zum Zählpunkt 6, d.h. ohne Fahrwerk, Räder, Motor gefertigt werden. Von dieser Produktionsstätte werden Module in definierter Anzahl und vorbestimmter Abrufreihenfolge per Bahn zum Fertigungsstandort transportiert. Hier erfolgt die Entladung aus den Bahnwaggons, Vereinzelung der Module und Einspeisen der Module in die Fertigungsstraße an einer Entladestation. Nach diesem Verfahren lassen sich allerdings nur Fahrzeuge einer Modellreihe mit gleicher Zusammenbaustufe fertigen.

Die JP 58016964 A offenbart außerdem ein gattungsgemäßes Verfahren zur Fertigung von Kraftfahrzeugen.

Es besteht daher die Aufgabe der Erfindung, ein Verfahren zur Fertigung von Kraftfahrzeugen unter Beibehaltung der vorteilhaften Just-in-Sequenz-Anlieferung dahingehend weiterzuentwickeln, dass Fahrzeuge einer zweiten Modellreihe auf ein- und derselben Fertigungsstraße gefertigt werden kann.

Diese Aufgabe wird erfindungsgemäß mit den Merkmalen des Patentanspruchs 1 gelöst.

Vorteilhafte Ausgestaltungen der Erfindung ergeben sich aus den Merkmalen der Unteransprüche.

Der Kern der Erfindung besteht darin, die Produktion der beiden Module, die in unterschiedlichen Zusammenbaustufen und an anderen Produktionsstandorten gefertigt sein können, derartig zu synchronisieren, dass an einer Sequenzierstation am Fertigungsstandort die Module der beiden Modellreihen in der richtigen Reihenfolge zusammengeführt werden können. Hierzu ist vorgesehen, dass die ersten Module von eines ersten Produktionsstandortes diskontinuierlich mit einem Transportmittel, z.B. mit der Bahn in Waggons, angeliefert werden. Die zweiten Module werden an einem zweiten Produktionsstandort beispielsweise in einer reduzierten Zusammenbaustufe auf das Transportmittel verladen und ebenfalls diskontinuierlich zum Fertigungsstandort transportiert. Beide Module werden sortenrein wechselweise an einer gemeinsamen Entladestation aus den Transportmitteln entladen und kontinuierlich in die Fertigung eingeschleust. An einer Sequenzierstation werden die ersten Module im Wechsel mit den zweiten Modulen in die gemeinsame Fertigungsstraße eingeschleust und dort bis zum Zählpunkt 8 versandfertig gemacht.

Vorzugsweise kann der Wechsel der Module an der Sequenzierstation in Abhängigkeit der geplanten Anzahl und Ausbringungsreihenfolge der Kraftfahrzeuge bestimmt werden. Alternativ ist aber auch denkbar, dass zunächst die ersten Module und dann die zweiten Module in die gemeinsame Fertigungsstraße eingeschleust werden.

In einer bevorzugten Ausgestaltungsform der Erfindung kann der Sequenzierstation am Fertigungsstandort eine Montagelinie für die Module vorgeschaltet sein. Während die ersten Module unmittelbar zur Sequenzierstation verbracht werden, kann für das zweite Modul eine Montagelinie vorgesehen, mit dem dessen Zusammenbaustufe erhöht wird. Erst wenn beide Modellreihen die gleiche Zusammenbaustufe erreicht haben, werden sie an der Sequenzierstation gemäß der geplanten Ausbringungsreihenfolge in die gemeinsame Fertigungslinie eingeschleust.

Die Bestimmung des Zeitpunkts, wann mit der Produktion eines einzelnen Moduls an seinem Produktionsstandort begonnen werden muss, kann in Abhängigkeit der geplanten Anzahl und der Ausbringungsreihenfolge erfolgen.

Vorzugsweise können die beiden Module an ein und der selben Entladestation am Fertigungsstandort entladen werden. Das hat den Vorteil, dass nur eine in der Regel großflächige Entladestation, insbesondere für Bahntransporte, vorgesehen sein muss. Je nach Auslastung kann die Entladung im Schichtbetrieb erfolgen.

Die Bestimmung des Zeitpunkts zum Entladen der Module an der gemeinsamen Entladestation kann in Abhängigkeit der Bedarfe und der Abrufreihenfolge bestimmt werden. Je höher die Ausbringung ist, desto kürzer sind die Abstände zwischen den einzelnen Entladezyklen.

Alternativ oder zusätzlich kann die Bestimmung des Zeitpunkts zum Entladen der Module in Abhängigkeit der Fertigungszeit der Module und/oder der Transportzeitzeit der Module bestimmt wird.

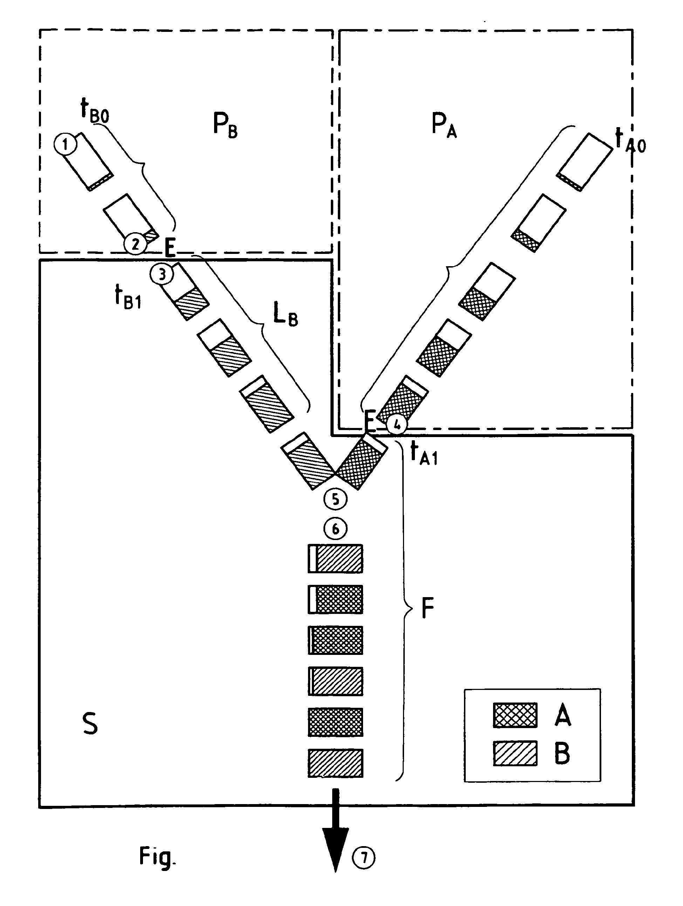

Ein bevorzugtes Ausführungsbeispiel der Erfindung wird an der einzigen Figur näher erläutert.

Die Figur zeigt eine schematische Darstellung eines Verfahrens zur Fertigung von Kraftfahrzeugen. Das Verfahren umfasst die Fertigung von Kraftfahrzeugen A einer ersten Modellreihe und Kraftfahrzeugen B einer zweiten Modellreihe auf einer gemeinsamen Fertigungslinie F an einem Fertigungsstandort S. Der Fortschritt der Fertigung der Fahrzeuge ist in der Darstellung mit zunehmend ausgefüllten Rechtecken dargestellt. Je größer der Füllstand, desto weiter fortgeschrittener ist die Zusammenbaustufe. Die Anzahl der Fahrzeuge und die Reihenfolge der Ausbringung kann in einem Fabrikkalender festgelegt werden. In diesem Fabrikkalender finden unter anderem das Schichtmodell und die nationalen Feiertage Berücksichtigung.

Ferner umfasst das Verfahren die Fertigung von zwei Modulen M_{A} und M_{B}, die an unterschiedlichen Produktionsstandorten P_{A} und P_{B} gefertigt werden. Die Module M_{A} und M_{B} werden bis zum Versenden zum Fertigungsstandort S in einer definierten Zeit Z_{A} bzw. Z_{B} gefertigt, die sich jeweils aus den Fertigungszeiten der einzelnen Fertigungsschritte zusammensetzt.

Von den Produktionsstandorten P_{A} und P_{B} werden die Module M_{A} und M_{B} jeweils gebündelt, rechtzeitig und in der richtigen Reihenfolge zum Fertigungsstandort S transportiert. Der gebündelte Transport erfolgt vorzugsweise mit der Bahn in Waggons.

Die Transportzeiten T_{A} und T_{B} richten sich u.a. nach der Entfernung der Produktionsstandorte P_{A} und P_{B} vom Fertigungsstandort S und der Geschwindigkeit des Transportmittels.

Das Be- bzw. Entladen der vorgefertigten Module in die Waggons bzw. aus den Waggons kann voll- bzw. teilautomatisch durch ein Belade- bzw. Entladesystem erfolgen, wie es bspw. in der DE 102 21 733 A1 oder in der DE 103 47 609 A1 beschrieben ist. Dabei ist vorgesehen, dass die Entladung der Waggons am Fertigungsstandort S an einer gemeinsamen Entladestation E erfolgt. So können beispielsweise die Module M_{A} in einer ersten Schicht und die Module M_{B} in einer zweiten Schicht entladen und nach und nach in die Fertigung eingeschleust werden. Durch die Lieferung in der richtigen Reihenfolge wird die ansonsten notwendige Pufferung oder sogar Lagerung der zugelieferten Module erheblich reduziert.

In der dargestellten, bevorzugten Ausgestaltungsform weisen die Module M_{A} und M_{B} voneinander unterschiedliche Fertigungstiefen auf. D.h., die Module M_{A} und M_{B} unterscheiden sich durch den Grad der Zusammenbaustufe voneinander. Das Modul M_{A} ist beispielsweise eine Fahrzeugkarosse, die im Produktionsstandort P_{A} bis zum sog. Zählpunkt 6 gefertigt wurde. Das Modul M_{A} ist demnach bis auf Einbau des Motor /Fahrwerks, Hochzeit, Rädermontage und Befüllung fertig montiert. Im Gegensatz dazu umfasst das Modul M_{B} lediglich eine lackierte Karosse. D.h., das Modul M_{B} ist bis zum sog. Zählpunkt 5 fertig gestellt.

Im Fertigungsstandort S wird die lackierte Karosse (Modul M_{B}) auf einer sich an die Entladestation E anschließenden Montagelinie L_{B} bis zum Zählpunkt 6 fertiggestellt. Die Fertigungszeit Z_{LB} setzt sich aus den Bearbeitungszeiten der einzelnen Fertigungsschritte zusammen.

Beim Einschleusen der Module M_{A} und M_{B} an der mit 5 bezeichneten Sequenzierstation weisen diese dann eine gleiche Fertigungstiefe bzw. Zusammenbaustufe auf, so dass beide Kraftfahrzeuge A und B zusammen auf der gemeinsamen Fertigungslinie F vom Zählpunkt 6 bis zum Zählpunkt 8 fertig gestellt werden können.

Das reibungslose Zusammenspiel der Produktionsstandorte P_{A} und P_{B} mit dem Fertigungsstandort S gestaltet sich wie folgt:
Aus der im Fabrikkalender geplanten Anzahl und Ausbringungsreihenfolge der Fahrzeuge am Ende der gemeinsamen Fertigungslinie F, die in der Darstellung mit Pfeil 7 gekennzeichnet ist, ergibt sich der Bedarf und die Abrufreihenfolge der Module M_{A} und M_{B} am Punkt 4 bzw. 2, d.h. an der Entladestation E. Dieser Bedarf und diese Abrufreihenfolge wird an die Produktionsstandorte P_{A} und P_{B} übermittelt. Dabei findet eine Synchronisation der Produktionsprogramme zwischen den einzelnen Produktionsstandorten statt, um beispielsweise unterschiedliche Feiertage oder Ferienzeiten auszugleichen.

Aus den geforderten Bedarfen und Abrufreihenfolgen wird in Abhängigkeit der Fertigungszeit Z_{A} bzw. Z_{B} der Startzeitpunkt t_{A0} der Produktion des Modul M_{A} bzw. der Startzeitpunkt t_{B0} der Produktion des Moduls M_{B} bestimmt. Dabei muss berücksichtigt werden, dass das Modul M_{B} zu einem Zeitpunkt t_{B1} an der Entladestation E angeliefert werden muss, der zeitlich vor dem Zeitpunkt T_{A1} der Anlieferung des Moduls M_{A} liegt, damit die Module M_{B} auf der Montagelinie L_{B} bis zur Sequenzierstation 5 gefertigt werden können. Die jeweiligen Transportmittel, die den jeweiligen Produktionsstandort P_{A} bzw. P_{B} mit dem Fertigungsstandort verbinden, werden anschließend in einer definierten Ladereihenfolge mit den Modulen M_{A} und M_{B} beladen. Diese Ladereihenfolge wird an den Fertigungsstandort S übermittelt. Sofern Unstimmigkeiten zwischen der Ladereihenfolge und der geplanten Ausbringungsreihenfolge festgestellt werden, kann während der Transportzeit T_{A} bzw. T_{B} ein Abgleich der Daten erfolgen und an der Sequenzierstation ein von der geplanten Ausbringungsreihenfolge abweichende Ist-Reihenfolge festgelegt werden.

Das beschriebene Fertigungsverfahren eignet sich auch für die gemeinsame Fertigung von Modellen gleicher Fertigungstiefe bzw. Zusammenbaustufe. Dann vereinfacht sich die Bestimmung der Bedarfe und der Abrufreihenfolge für die Produktionsstandorte.

## Patentansprüche

1. Verfahren zur Fertigung von Kraftfahrzeugen an einem Fertigungsstandort (S), aus der fertig montierte Kraftfahrzeuge in einer geplanten Anzahl und Ausbringungsreihenfolge ausgeschleust werden, wobei erste Module (M_{A}) in einer bestimmten Zusammenbaustufe von einer ersten Produktionsstätte (P_{A}) diskontinuierlich zu dem Fertigungsstandort (S) angeliefert und kontinuierlich in eine Fertigungsstraße (F) eingeschleust werden, in der die Module (M_{A}) zu Kraftfahrzeugen (A) gefertigt werden,
**dadurch gekennzeichnet,**
**dass** zweite Module (M_{B}) von einer zweiten Produktionsstätte (P_{B}) in einer bestimmten Zusammenbaustufe an einer Sequenzierstation (5) im Wechsel mit den Modulen (M_{A}) in die gemeinsame Fertigungsstraße (F) eingeschleust werden.

2. Verfahren nach Anspruch 1,
**dadurch gekennzeichnet,**
**dass** der Wechsel der Module (M_{A}, M_{B}) in Abhängigkeit der geplanten Anzahl und Ausbringungsreihenfolge der Kraftfahrzeuge bestimmt wird.

3. Verfahren nach einem oder mehreren der vorgenannten Ansprüche,
**dadurch gekennzeichnet,**
**dass** der Sequenzierstation (5) am Fertigungsstandort (S) eine Montagelinie (L_{B}) für die Module (M_{B}) vorgeschaltet ist.

4. Verfahren nach einem oder mehreren der vorgenannten Ansprüche,
**dadurch gekennzeichnet,**
**dass** der Zeitpunkt (t_{A0}, t_{B0}) zum Start der Produktion der Module (M_{A}, M_{B}) in Abhängigkeit der geplanten Anzahl und der Ausbringungsreihenfolge bestimmt wird.

5. Verfahren nach einem oder mehreren der vorgenannten Ansprüche,
**dadurch gekennzeichnet,**
**dass** die Module (M_{A}, M_{B}) an einer gemeinsamen Entladestation (E) am Fertigungsstandort (S) entladen werden.

6. Verfahren nach einem oder mehreren der vorgenannten Ansprüche,
**dadurch gekennzeichnet,**
**dass** der Zeitpunkt (t_{A1}, t_{B1}) zum Entladen der Module (M_{A}, M_{B}) an der gemeinsamen Entladestation (E) in Abhängigkeit der Bedarfe und der Abrufreihenfolge bestimmt wird.

7. Verfahren nach einem oder mehreren der vorgenannten Ansprüche,
**dadurch gekennzeichnet,**
**dass** der Zeitpunkt (t_{A1}, t_{B1},) zum Entladen der Module (M_{A}, M_{B}) in Abhängigkeit der Fertigungszeit (Z_{A}, Z_{B}) der Module bestimmt wird.

8. Verfahren nach einem oder mehreren der vorgenannten Ansprüche,
**dadurch gekennzeichnet,**
**dass** der Zeitpunkt (t_{A1}, t_{B1}) zum Entladen der Module (M_{A}, M_{B}) in Abhängigkeit der Transportzeitzeit (T_{A}, T_{B}) der Module bestimmt wird.

9. Verfahren nach einem oder mehreren der vorgenannten Ansprüche, **dadurch gekennzeichnet,**
**dass** der Beladezeitpunkt der Module (M_{A}, M_{B}) entsprechend der Transportzeit (T_{A}, T_{B}) rechtzeitig erfolgt.

## Claims

1. Method for the manufacture of motor vehicles at a manufacturing location (S), from which ready-assembled motor vehicles are discharged in a planned number and order of output, first modules (M_{A}) being delivered in a specific assembly stage discontinuously from a first production shop (P_{A}) to the manufacturing location (S) and being fed continuously into a manufacturing line (F) in which the modules (M_{A}) are manufactured into motor vehicles (A), **characterized in that** second modules (M_{B}) are fed in a specific assembly stage from a second production shop (P_{B}) into the joint manufacturing line (F) at a sequencing station (5) alternately with the modules (M_{A}).

2. Method according to Claim 1, **characterized in that** the alternation of the modules (M_{A}, M_{B}) is determined as a function of the planned number and order of output of the motor vehicles.

3. Method according to one or more of the abovementioned claims, **characterized in that** the sequencing station (5) is preceded at the manufacturing location (S) by an assembly line (L_{B}) for the modules (M_{B}).

4. Method according to one or more of the abovementioned claims, **characterized in that** the timepoint (t_{A0}, t_{B0}) for starting the production of the modules (M_{A}, M_{B}) is determined as a function of the planned number and of the order of output.

5. Method according to one or more of the abovementioned claims, **characterized in that** the modules (M_{A}, M_{B}) are unloaded at the manufacturing location (S) at a joint unloading station (E).

6. Method according to one or more of the abovementioned claims, **characterized in that** the timepoint (t_{A1}, t_{B1}) for unloading the modules (M_{A}, M_{B}) at the joint unloading station (E) is determined as a function of the demands and of the call-up sequence.

7. Method according to one or more of the abovementioned claims, **characterized in that** the timepoint (t_{A1}, t_{B1}) for unloading the modules (M_{A}, M_{B}) is determined as a function of the manufacturing time (Z_{A}, Z_{B}) of the modules.

8. Method according to one or more of the abovementioned claims, **characterized in that** the timepoint (t_{A1}, t_{B1}) for unloading the modules (M_{A}, M_{B}) is determined as a function of the transport time (T_{A}, T_{B}) of the modules.

9. Method according to one or more of the abovementioned claims, **characterized in that** the loading timepoint of the modules (M_{A}, M_{B}) takes place in due time according to the transport time (T_{A}, T_{B}).

## Revendications

1. Procédé de fabrication de véhicules automobiles sur un site de fabrication (S), à partir duquel des véhicules automobiles entièrement montés sortent en un nombre et dans un ordre de production programmés, dans lequel des premiers modules (M_{A}) sont livrés à un degré d'assemblage déterminé, de façon discontinue, d'un premier lieu de production (P_{A}) au site de fabrication (S) et sont introduits en continu dans une ligne de fabrication (F), dans laquelle les modules (M_{A}) sont équipés en véhicules automobiles (A), **caractérisé en ce que** des deuxièmes modules (M7_{B}) provenant d'un deuxième lieu de production (P_{B}) sont introduits, à un degré d'assemblage déterminé, en alternance avec les modules (M_{A}) dans une station de séquençage (5) dans la ligne de fabrication commune (F).

2. Procédé selon la revendication 1, **caractérisé en ce que** l'alternance des modules (M_{A}, M_{B}) est déterminée en fonction du nombre et de l'ordre de production programmés des véhicules automobiles.

3. Procédé selon une ou plusieurs des revendications précédentes, **caractérisé en ce que** la station de séquençage (5) est précédée sur le site de fabrication (S) par une ligne de montage (L_{B}) pour les modules (M_{B}).

4. Procédé selon une ou plusieurs des revendications précédentes, **caractérisé en ce que** l'instant (t_{A0}, t_{B0}) de démarrage de la production des modules (M_{A}, M_{B}) est déterminé en fonction du nombre et de l'ordre de production programmés.

5. Procédé selon une ou plusieurs des revendications précédentes, **caractérisé en ce que** les modules (M_{A}, M_{B}) sont déchargés à une station de déchargement commune (E) sur le site de fabrication (S).

6. Procédé selon une ou plusieurs des revendications précédentes, **caractérisé en ce que** l'instant (t_{A1}, t_{B1}) de déchargement des modules (M_{A}, M_{B}) à la station de déchargement commune (E) est déterminé en fonction des besoins et de l'ordre d'appel.

7. Procédé selon une ou plusieurs des revendications précédentes, **caractérisé en ce que** l'instant (t_{A1}, t_{B1}) de déchargement des modules (M_{A}, M_{B}) est déterminé en fonction du temps de fabrication (Z_{A}, Z_{B}) des modules.

8. Procédé selon une ou plusieurs des revendications précédentes, **caractérisé en ce que** l'instant (t_{A1}, t_{B1}) de déchargement des modules (M_{A}, M_{B}) est déterminé en fonction du temps de transport (T_{A}, T_{B}) des modules.

9. Procédé selon une ou plusieurs des revendications précédentes, **caractérisé en ce que** l'instant de chargement des modules (M_{A}, M_{B}) est fixé au moment voulu en fonction du temps de transport (T_{A}, T_{B}).
